# EUROPEAN PATENT APPLICATION

(11) **EP 4 468 177 A1**
(43) Date of publication of application: **27.11.2024**
(21) Application number: 24175382.1
(22) Date of filing: 13.05.2024
(51) Int. Cl.: G06F 18/24, G06T 7/00, G06V 10/20, G06V 10/776, G06V 10/82

(54) **INFORMATION PROCESSING DEVICE**

(30) Priority: 26.05.2023 US 202318202364
(71) Applicant: Nomura Research Institute, Ltd., Chiyoda-ku Tokyo 100-0004 (JP)
(72) Inventor: TAGOMORI, Teruhiro, Irvine, CA, 92614 (US); KAKIMOTO, Kenji, Tokyo, 100-0004 (JP); HAGA, Yumehisa, Tokyo, 100-0004 (JP)
(74) Representative: Hoffmann Eitle

(57) **Abstract**

An information processing device outputs a first detection result indicating a region in which an object is detected in a region in an image by using a first machine learning model that detects the object in the image. In addition, the information processing device outputs a second detection result indicating a region in which the object is detected in the region in the image by using a second machine learning model having a different predetermined characteristic related to detection of the object from that of the first machine learning model. Furthermore, in a case where the difference between the first detection result and the second detection result satisfies a predetermined condition, the information processing device makes a notification of the presence of erroneous detection regarding detection of an object by the first machine learning model.

## Description

### BACKGROUND OF THE INVENTION

### 1. TECHNICAL FIELD

The present invention relates to an information processing device that detects an object in an image.

### 2. DESCRIPTION OF THE RELATED ART

In recent years, a technique for detecting an object in an image using a model (machine learning model) learned by machine learning such as deep learning has been known. Detection accuracy of an object by a machine learning model may be practical, but erroneous detection may occur in a situation (for example, climate) when an image is photographed or in a case where intentional processing is applied to the image.

JP 2022-131761 A proposes a technique in which, when a human-like region in an image photographed by a monitoring camera is detected using a machine learning model, whether the machine learning model erroneously detects a region where an insect flies as a human-like region is determined based on the presence or absence of whiteout.

The erroneous detection by the machine learning model may be caused by various factors such as a situation change when an image is photographed. JP 2022-131761 A proposes a technique for finding erroneous detection of a machine learning model due to flight of an insect, but when implementation is incorporated depending on factors of individual erroneous detection, there is a problem in that the implementation becomes more complicated as the factors of erroneous detection increase.

### SUMMARY OF THE INVENTION

The present invention has been made in view of the above problems, and an object thereof is to realize a technology capable of finding erroneous detection of a machine learning model by a general-purpose mechanism.

The present invention provides an information processing device as specified in claims 1 to 7.

According to the present invention, erroneous detection of a machine learning model can be found by a general-purpose mechanism.

### BRIEF DESCRIPTION OF THE DRAWINGS

FIG. 1 is a diagram for explaining an outline of an information processing system according to an embodiment of the present invention;
FIG. 2 is a block diagram illustrating a hardware configuration example of an information processing device according to the present embodiment;
FIG. 3 is a block diagram illustrating a functional configuration example of the information processing device according to the present embodiment;
FIG. 4 is a diagram for explaining a case where it is determined that there is erroneous detection by a detection model in the present embodiment;
FIG. 5 is a diagram for explaining a case where it is determined that there is no erroneous detection by a detection model in the present embodiment;
FIG. 6 is a diagram for explaining a case where erroneous detection determination processing according to the present embodiment is applied to a moving image;
FIG. 7 is a diagram illustrating a case where erroneous detection determination processing (using a plurality of verification models) according to the present embodiment is applied to a moving image;
FIG. 8 is a flowchart for explaining a series of operations for making a notification of erroneous detection according to the present embodiment; and
FIG. 9 is a diagram illustrating an example of a data configuration of erroneous detection notification information according to the present embodiment.

### DETAILED DESCRIPTION

An embodiment will be described in detail below with reference to the accompanying drawings. Note that the following embodiment does not limit the invention according to the claims, and all combinations of features described in the embodiment are not necessarily essential to the invention. Two or more features of the plurality of features described in the embodiment may be discretionarily combined. In addition, the same or similar configurations are denoted by the same reference numerals, and redundant description will be omitted.

### <Outline of Information Processing System>

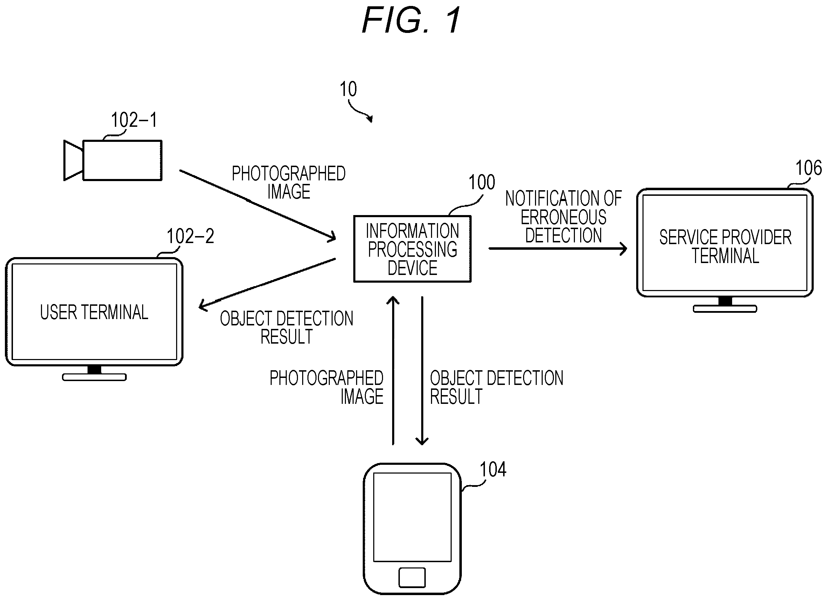

An example of an information processing system according to the present embodiment will be described with reference to FIG. 1. An information processing system 10 includes, for example, an information processing device 100 and a communication device 104 that transmits photographed images and receives object detection results. The device that transmits the photographed image and the device that receives the object detection result may be separate devices, and may be separately configured as, for example, an image transmitting device (for example, a monitoring camera 102-1) that transmits photographed images and a result receiving device (a user terminal 102-2) that receives object detection results. Furthermore, the information processing system 10 may include a service provider terminal 106. The information processing device 100 can communicate with the communication device 104 (or the image transmitting device or the result receiving device) and the service provider terminal 106 via a network. Note that the present embodiment includes the information processing device 100 and the communication device 104 that transmits photographed images and receives object detection results, but it may be configured to operate the information processing device 100 on a user's device.

For example, as implementation of a predetermined service including object detection, the information processing device 100 detects an object in a photographed image using a machine learning model and transmits an object detection result. Note that, in the following embodiment, a machine learning model executed to detect an object is referred to as a detection model. The detection model may be any of various models as long as the models include an object detection function. In the present embodiment, examples of the object may include a person, an animal, a plant, a vehicle, a building, daily necessities, a food item, and the like. Therefore, examples of the detection model may include a model that detects a person in an image, a model that detects an animal in an image, a model that detects a specific article (for example, a vehicle, daily necessities, or the like) in an image, a model that detects a plurality of these types of objects, or the like. Furthermore, the detection model may be a model that detects an object (for example, a person performing a specific action, a person wearing a specific article, a person of a specific sex, or the like) having a specific feature. The object detection result may include information (for example, a frame indicating a region of the detected object, a color or text indicating a name of the object, or a numerical value such as a score for the object at the time of detection) indicating the detected object.

Examples of the predetermined service may include a service that detects and annotates at least one of a person, an animal, a plant, a vehicle, a building, daily necessities, a food item, and the like from a photographed still image or moving image, provides information related to a detected object, and provides navigation. Examples of the predetermined service may also include a service that provides information for analyzing a still image or a moving image by detecting the above objects from the still image or the moving image transmitted from a fixed device such as a monitoring camera. According to an embodiment of the service, the information processing device 100 may acquire an image photographed from an image transmitting device (for example, the monitoring camera 102-1) and transmit an object detection result to a result receiving device (for example, the user terminal 102-2 installed to monitor an image of the monitoring camera).

Furthermore, the information processing device 100 executes the erroneous detection determination processing to be described later in addition to the detection of the object in the image using the detection model. The erroneous detection determination processing is processing of determining whether there is erroneous detection in the detection result of the object by an object detection model, and when there is erroneous detection, making a notification of the presence of the erroneous detection. In the erroneous detection determination processing, the information processing device 100 uses, for example, a machine learning model (also simply referred to as a verification model) having a robust predetermined characteristic related to detection of an object compared to the object detection model. For example, the verification model can detect one or more characteristics, such as, for example, a person, a vehicle, or a specific feature, robustly compared to the detection model. Therefore, in a case where an object is detected in the verification model but is not detected in the detection model, it is conceivable that there is erroneous detection in the detection result of the detection model (due to some influence in the image). Furthermore, as a verification model, a model that can robustly detect an object in an image including an attack by an adversarial sample can be used. If the detection model was not able to detect an object of interest on the image including the adversarial sample whereas the verification model was able to detect an object of interest (or a part thereof), it can be determined that there is erroneous detection in the detection result by the detection model. As described above, in the present embodiment, it is possible to find erroneous detection of the machine learning model by a general-purpose mechanism instead of adding individual implementation depending on factors of erroneous detection.

In a case where it is determined that there is erroneous detection by the erroneous detection determination processing, the information processing device 100 makes a notification of the erroneous detection. In the example illustrated in FIG. 1, the notification of erroneous detection is transmitted to, for example, the service provider terminal 106. For example, the service provider terminal 106 is a terminal managed by a service provider, and for example, the service provider provides an object detection service for detecting an object in an image photographed by the monitoring camera 102-1. The service provider terminal 106 can perform, for example, setting of a hyperparameter of a detection model, learning and deployment of the detection model, confirmation of an operation state of the detection model, and the like regarding the detection model. When the information processing device 100 transmits the notification of erroneous detection to the service provider terminal 106, the service provider can grasp the presence of erroneous detection in the detection model being used. The service provider can prepare necessary learning data to relearn the detection model or replace the detection model with another machine learning model having excellent necessary characteristics depending on the content of erroneous detection. Note that, in the present embodiment, the case where the information processing device 100 transmits the notification of erroneous detection to the service provider terminal 106 has been described as an example, but the information processing device 100 may transmit the notification of erroneous detection to the user terminal 102-2 or the communication device 104 depending on the content of the service.

The information processing device 100 is, for example, a server device. The information processing device 100 may be, for example, a server device that realizes a platform of a cloud service, and the object detection processing and the erroneous detection determination processing described above may be realized on the platform of the cloud service. However, the information processing device 100 may be an edge node disposed on a network or a node constituting a P2P network. Alternatively, the information processing device 100 may be a virtual machine configured on a platform of a cloud service.

Furthermore, in the present embodiment, a case where the object detection processing using the detection model and the erroneous detection determination processing using the verification model are executed on the information processing device 100 that is a server device will be described as an example. However, the present embodiment is also applicable to a case where the processing is executed by a plurality of server devices that implement a platform of a cloud service. Furthermore, the present embodiment is also applicable to a case where the object detection processing and the erroneous detection determination processing are executed in the communication device 104 illustrated in FIG. 1, or in a case where the object detection processing and the erroneous detection determination processing are executed in the monitoring camera 102-1 or the user terminal 102-2.

The communication device 104 is, for example, a tablet device or a smartphone, but may be a personal computer, or the like. In addition, the service provider terminal 106 is, for example, a personal computer, but may be a tablet device or a smartphone.

### <Hardware Configuration Example of Information Processing Device>

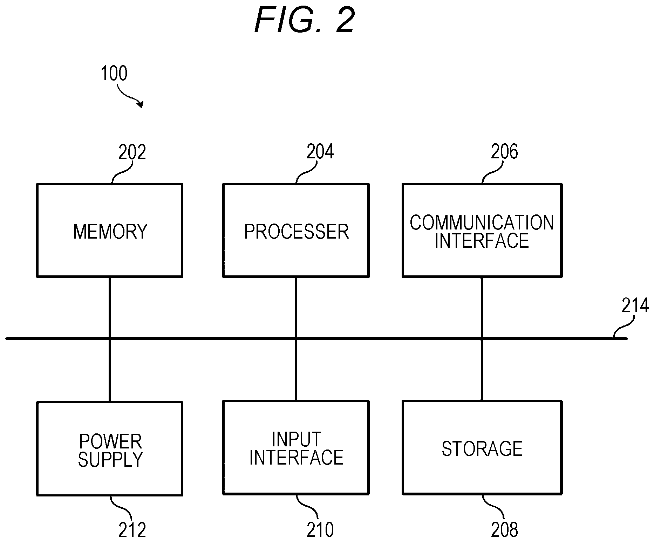

A hardware configuration example of the information processing device 100 will be described with reference to FIG. 2. The information processing device 100 includes a memory 202, a processor 204, a communication interface 206, a storage 208, an input interface 210, and a power supply 212. These elements are each connected to a bus 214 and communicate with one another via the bus 214.

The memory 202 is, for example, a volatile storage medium such as a DRAM, and temporarily stores data and programs. In addition, the storage 208 is a non-volatile storage medium that permanently stores data and programs. The stored program includes one or more instructions executable by a processor. The storage 208 may be, for example, a semiconductor memory or a hard disk. The storage 208 can store various data such as training data for learning a neural network, test data for testing the learned neural network, a photographed image received from the monitoring camera 102-1 or the communication device 104, and notification data of erroneous detection to be described later.

The processor 204 includes, for example, an arithmetic circuit such as a central processing unit (CPU). The processor 204 may be configured by one or more processors. The processor 204 may further include an arithmetic circuit (for example, a GPU) and dedicated hardware for executing statistical processing such as machine learning at a higher speed, and may include a memory therein. The processor 204 implements various functions of the information processing device 100 by loading a program stored in the storage 208 to the memory 202 and executing it.

The communication interface 206 is an interface for transmitting and receiving data to and from an external device outside the information processing device 100. The communication interface 206 may include a communication circuit capable of communication in a communication scheme conforming to various standards. The communication interface 206 is connected to a network and exchanges data with the communication device 104 and the like illustrated in FIG. 1 via the network. The input interface 210 is, for example, a device for receiving an input from an administrator of the information processing device 100, but may not be provided.

The power supply 212 is a circuit or a module for providing power for operating each unit of the information processing device 100. The power supply 212 may include a battery.

### <Functional Configuration Example of Information Processing Device>

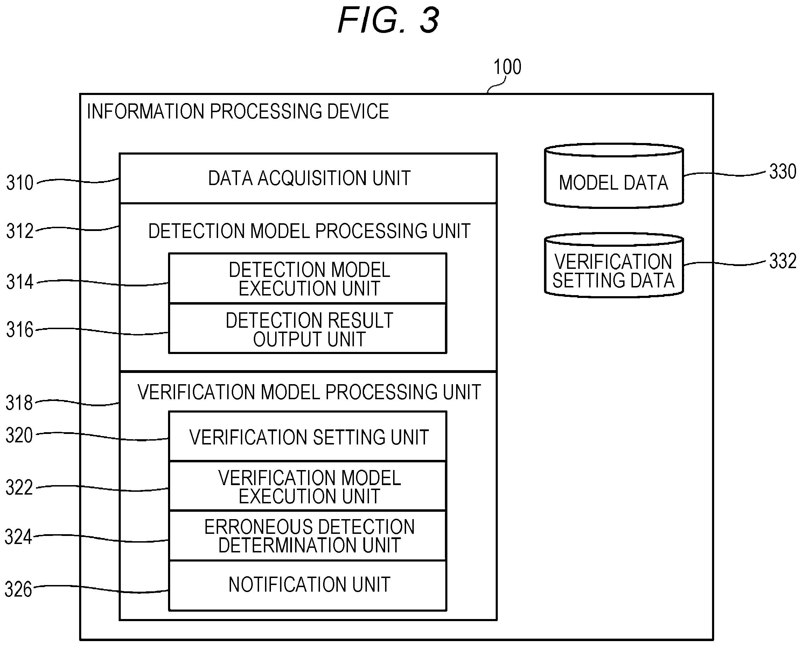

Next, a functional configuration example of the information processing device 100 will be described with reference to FIG. 3. The functional configuration example illustrated in FIG. 3 can be implemented by, for example, the processor 204 loading a program stored in the storage 208 to the memory 202 and executing it. Note that each of the functional blocks described in the present embodiment may be integrated or separated, and the described function may be implemented by another block. In addition, what has been described as hardware may be implemented by software, and vice versa.

A data acquisition unit 310 acquires, for example, a photographed image from an external device. The photographed image may be included in a plurality of frames constituting a moving image. For example, the data acquisition unit 310 may acquire a moving image including images of a plurality of consecutive frames from the monitoring camera 102-1 or the communication device 104. In addition, the data acquisition unit 310 may acquire the photographed image received from the communication device 104 or the like and temporarily or permanently stored in the storage 208. Moreover, a photographed image stored in a storage outside the information processing device 100 may be acquired.

A detection model processing unit 312 includes a detection model execution unit 314 and a detection result output unit 316, and executes object detection processing with these functional configurations.

The detection model execution unit 314 inputs the image (photographed image) acquired by the data acquisition unit 310, executes a learned detection model, and detects an object in the photographed image. As described above, the detection model may be any of various models as long as the models include an object detection function. For example, a detection model capable of detecting a plurality of types of objects can be used as a detection model. The detection model execution unit 314 can use, for example, a known model called YOLO or Faster R-CNN, as a detection model. The detection model outputs, for example, a frame indicating a region of a detected object, a color or text indicating a name of the detected object, and a numerical value indicating a probability at the time of detection.

The detection result output unit 316 outputs information about the object detected by the detection model (that is, the object detection result). Using an output from the detection model execution unit 314, the detection result output unit 316 superimposes a frame indicating a region of the object on the photographed image to generate an object detection result. The detection result output unit 316 can transmit the generated object detection result to, for example, the communication device 104 or the user terminal 102-2.

A verification model processing unit 318 includes a verification setting unit 320, a verification model execution unit 322, an erroneous detection determination unit 324, and a notification unit 326, and the verification model processing unit 318 executes erroneous detection determination processing with these functional configurations.

The verification setting unit 320 sets a verification model to be used for the erroneous detection determination processing in accordance with, for example, instruction information from the service provider terminal 106. The instruction information includes information related to specification and a usage mode of the verification model. The instruction information includes, for example, identification information of a verification model used for verification, version information, information of an execution frequency, and the like. The identification information of the verification model is, for example, information for identifying a learned model stored in model data 330. A plurality of verification models may be specifiable by specifying a plurality of pieces of identification information.

The verification setting unit 320 sets, for example, a verification model specialized for detection of a specific object that can robustly detect the specific object (compared to the detection model) based on identification information of the verification model. When a detection model capable of detecting a plurality of types of objects is used, identification information of a plurality of verification models may be designated. In this case, it is possible to designate a model capable of robustly detecting a person and a model that can robustly detect a vehicle (compared to the verification model). Alternatively, in a case where one detection model capable of detecting a plurality of types of objects is used, the verification setting unit 320 can set one verification model capable of detecting a plurality of types of objects similar to the detection model based on the identification information of the verification model, but also capable of detecting each object more robustly. As described above, in the present embodiment, a desired verification model can be set depending on the detection model used for the object detection processing. That is, erroneous detection of a machine learning model that can occur due to various factors can be found by a more general-purpose mechanism.

The version information in the instruction information indicates a version of a verification model, and for example, it is possible to designate a verification model after relearning is performed by the added learning data.

The execution frequency in the instruction information specifies, for example, the number of frames out of a plurality of consecutive frames in a moving image for which the verification model is executed. While the verification model can robustly detect an object compared to the detection model, the verification model may have a low execution speed compared to the detection model. Therefore, when the detection model is executed for a plurality of consecutive frames, the verification model can be set to be executed less frequently. For example, the detection model outputs detection results for a first number of images per second among images of a plurality of frames, and the verification model outputs detection results for a second number of images per second (a number smaller than the first number) among the images of the plurality of frames. The execution frequency may be represented by, for example, a ratio between the number of executions of the detection model and the number of executions of the verification model. As described above, in the information processing device 100, the processing load on the information processing device 100 can be reduced, and the operation of the information processing device 100 can be speeded up. In addition, it is possible to realize a high-speed detection service by using a detection model that operates at a higher speed, and at the same time, it is possible to detect erroneous detection by the detection model.

The verification model execution unit 322 inputs an image (photographed image) acquired by the data acquisition unit 310 according to the setting by the verification setting unit 320, and executes the above-described verification model. The verification model outputs, for example, a frame indicating a region of a detected object. However, the present embodiment is not limited to the frame indicating the region of the object, and may be another form such as information indicating the shape of a region of an object. The verification model may output information indicating the name of a detected object corresponding to the frame.

The erroneous detection determination unit 324 determines whether there is erroneous detection in a detection result by a detection model, based on the detection result by the detection model and a detection result by a verification model. For example, when a difference between the detection result by the detection model and the detection result by the verification model is large enough to satisfy a certain condition, the erroneous detection determination unit 324 determines that there is erroneous detection in the detection result by the detection model.

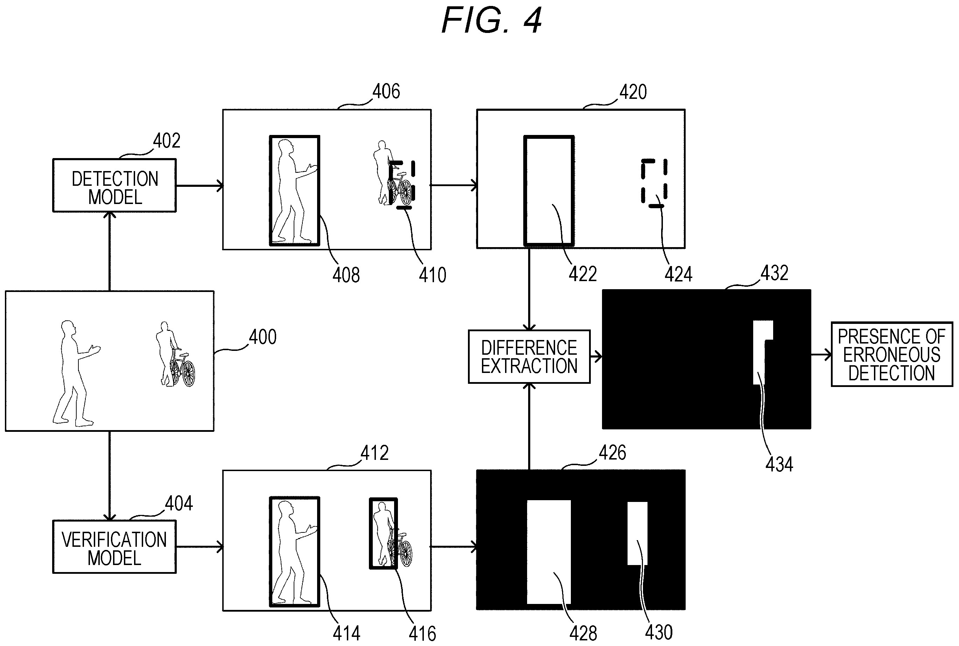

Here, a case where it is determined that there is erroneous detection by the detection model will be described with reference to FIG. 4. A photographed image 400 is a photographed image acquired by the data acquisition unit 310. The photographed image 400 is input to each of a detection model 402 and a verification model 404. Each of the detection model 402 and the verification model 404 detects an object in the photographed image 400. In this example, the verification model 404 is a model that detects a person robustly compared to the detection model 402.

A detection result 406 schematically illustrates an example of an object detected by the detection model 402. Frames 408 and 410 indicate regions of the object detected by the detection model 402. In the detection result 406, the frames 408 and 410 are superimposed on the photographed image 400 for easy understanding. In this example, the detection model 402 detects a person included in the region of the frame 408 and a bicycle included in the region of the frame 410. A detection region 420 schematically illustrates a state in which only regions 422 and 424 of an object detected by the detection model 402 are extracted.

On the other hand, a detection result 412 schematically illustrates an example of an object detected by the verification model 404. Frames 414 and 416 indicate regions of the object detected by the verification model 404. In the detection result 412, the frames 414 and 416 are superimposed on the photographed image 400 for easy understanding. In this example, the verification model 404 detects a person included in the region of the frame 414 and a person included in the region of the frame 416. A map image 426 is a binary image in which a numerical value "1" is assigned to regions 428 and 430 of the object detected by the verification model 404 and a numerical value "0" is assigned to the other regions.

The erroneous detection determination unit 324 extracts a difference between the map image 426 and the detection region 420. For example, a difference map image 432 in which "1" is assigned to a region (non-overlapping region) having a difference between the region of the object of the map image 426 and the regions 422 and 424 of the object is generated. In the difference map image 432, a bunch of regions (difference region 434) is generated by a difference between the region of the object detected by the detection model 402 and the region of the object detected by the verification model 404. For example, when it is determined that the difference region 434 has a size equal to or larger than a predetermined threshold, the erroneous detection determination unit 324 determines that there is erroneous detection in the detection result of the detection model 402. The present embodiment uses the method of generating the difference map and determining the presence of erroneous detection, and can also use other methods such as a method of comparing only the number of detected objects of a target image, a method of comparing the number of detected objects of a target image with the respective coordinate positions (for example, the barycentric coordinates of each object), and a method of comparing the number of detected objects of a target image with the respective coordinate positions and areas.

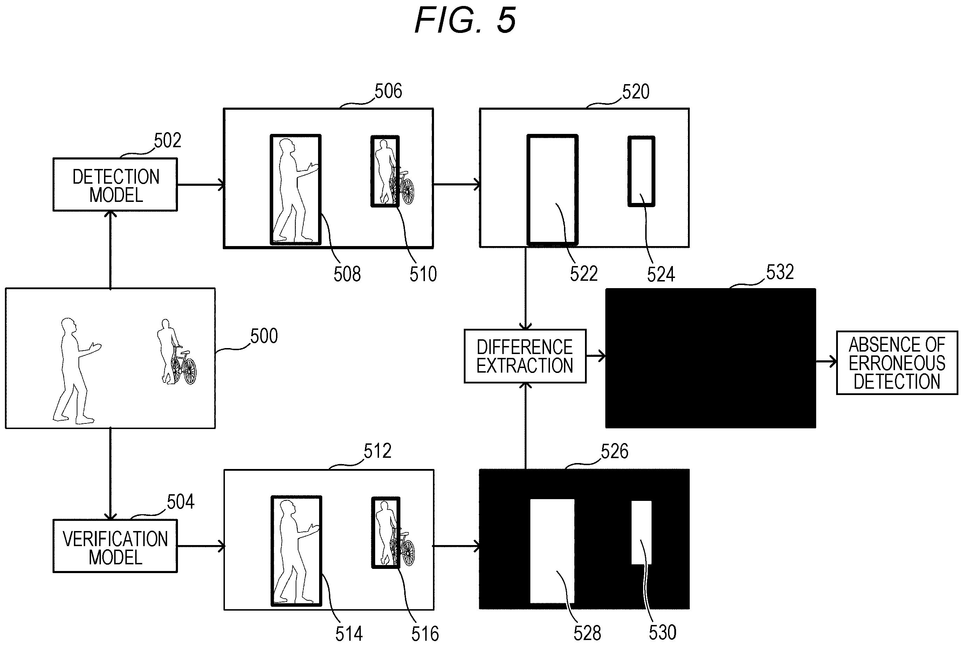

Next, a case where it is determined that there is no erroneous detection by the detection model will be described with reference to FIG. 5. A photographed image 500 is a photographed image acquired by the data acquisition unit 310, and is the same as the photographed image 400 illustrated in FIG. 4. The photographed image 500 is input to each of a detection model 502 and a verification model 504. Each of the detection model 502 and the verification model 504 detects an object in the photographed image 500. For example, while the detection model 502 is a model that detects a person in an image, the verification model 504 is a model that detects a person robustly compared to the detection model 502.

A detection result 506 schematically illustrates an example of an object detected by the detection model 502. Frames 508 and 510 indicate regions of the object detected by the detection model 502. In the detection result 506, the frames 508 and 510 are superimposed on the photographed image 500 for easy understanding. In this example, the detection model 502 detects a person included in the region of the frame 508 and a person included in the region of the frame 510. A detection region 520 schematically illustrates a state in which only regions 522 and 524 of an object detected by the detection model 502 are extracted.

On the other hand, a detection result 512 schematically illustrates an example of an object detected by the verification model 504. Frames 514 and 516 indicate regions of the object detected by the verification model 504. In the detection result 512, the frames 514 and 516 are superimposed on the photographed image 500 for easy understanding. In this example, the verification model 504 detects a person included in the region of the frame 514 and a person included in the region of the frame 516. A map image 526 is a binary image in which a numerical value "1" is assigned to regions 528 and 530 of the object detected by the verification model 504 and a numerical value "0" is assigned to the other regions.

The erroneous detection determination unit 324 extracts a difference between the map image 526 and the detection region 520. For example, a difference map image 532 in which "1" is assigned to a region (non-overlapping region) having a difference between the region of the object of the map image 526 and the regions 522 and 524 of the object is generated. In the difference map image 532, there is no difference between the region of the object detected by the detection model 502 and the region of the object detected by the verification model 504. Therefore, since, for example, there is no difference region of a size equal to or larger than a predetermined threshold, the erroneous detection determination unit 324 determines that there is no erroneous detection in the detection result of the detection model 502. That is, in a case where an object in a region having a predetermined size or more is detected in a region where an object is not detected in the detection result of the detection model in the detection result of the verification model, it is determined that erroneous detection exists.

Note that the above determination by the erroneous detection determination unit 324 is also applicable to a case of using a plurality of verification models. For example, the erroneous detection determination unit 324 generates a map image obtained by combining (OR of regions of "1") the map images 526 from a first verification model that robustly detects a person compared to the detection model and a second verification model that robustly detects a vehicle compared to the detection model. Then, a difference map image is generated between the combined map image and the regions 422 and 522 or the like of the object. That is, when an object in a region having a predetermined size or more is detected in at least one of the detection result of the first verification model and the detection result of the second verification model in a region where no object is detected in the detection result of the detection model, it can be determined that erroneous detection exists. In this way, it is possible to determine erroneous detection related to a plurality of characteristics with a simple mechanism. That is, it becomes difficult to introduce a complicated implementation for individual factors of erroneous detection, the operation in the information processing device is simplified, and the operation is easily stabilized. Note that, as a method of using the first verification model and the second verification model in combination, in addition to the above, a configuration may be employed in which the second verification model is also used together based on the detection result of the first verification model, and for example, in a case where detection reliability of each object that is a detection result of the first verification model is equal to or less than a predetermined threshold, the object detection is also performed with the second verification model, and the respective detection results are synthesized as described above.

A description will be given again with reference to FIG. 3. When the erroneous detection determination unit 324 determines that there is erroneous detection, the notification unit 326 transmits a notification of the erroneous detection to an external device (for example, the service provider terminal 106). The notification unit 326 may transmit a notification of erroneous detection every time erroneous detection occurs. Alternatively, for example, the notification unit 326 may create notification information in which information regarding a notification of erroneous detection is recorded, and transmit the generated notification information to an external device at predetermined time intervals.

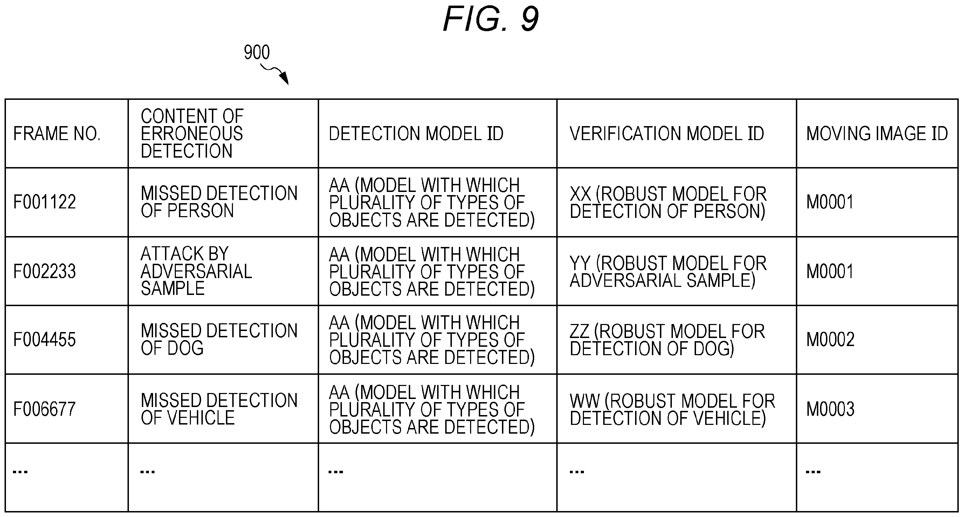

The notification information can be, for example, a data structure 900 illustrated in FIG. 9. The data structure 900 can include, for example, a frame number, the content of erroneous detection, identification information of a detection model, identification information of a verification model, and identification information of a moving image.

The frame number is a number of a frame for which it is determined that erroneous detection is present in the moving image. This frame is the frame number of the moving image identified by the "identification information of a moving image" of the data structure 900. The content of erroneous detection is, for example, information indicating for what kind of characteristic the erroneous detection has existed. The notification unit 326 may describe the characteristic based on the detection result of the verification model when erroneous detection occurs. For example, the notification unit 326 may use a detection result (name of an object according to the frame 416, which means person here) of the verification model corresponding to a region (difference region 434) in which it was determined that there was erroneous detection to set the content of erroneous detection as "missed detection of a person". The identification information of the detection model and the identification information of the verification model are each the identification information of a model used when it was determined that there was erroneous detection.

When the service provider terminal 106 receives the notification information generated by the notification unit 326, the service provider can easily grasp what kind of erroneous detection has occurred in the detection model being operated and what kind of image the erroneous detection has occurred in. Therefore, the service provider can easily improve the quality of the service using the detection model by specifying and replenishing the learning data used when the detection model is learned again or replacing the detection model, by browsing the notification information.

The model data 330 is a database that stores data of the detection model and the verification model. The model data 330 includes information such as hyperparameters and learned parameters of each model.

The verification setting data 332 stores the above-described various types of information set by the above-described verification setting unit 320, for example, identification information of a verification model used for verification, version information of the verification model, information of an execution frequency of executing the verification model, and the like.

### <Series of Operations for Making Notification of Erroneous Detection in Information Processing Device>

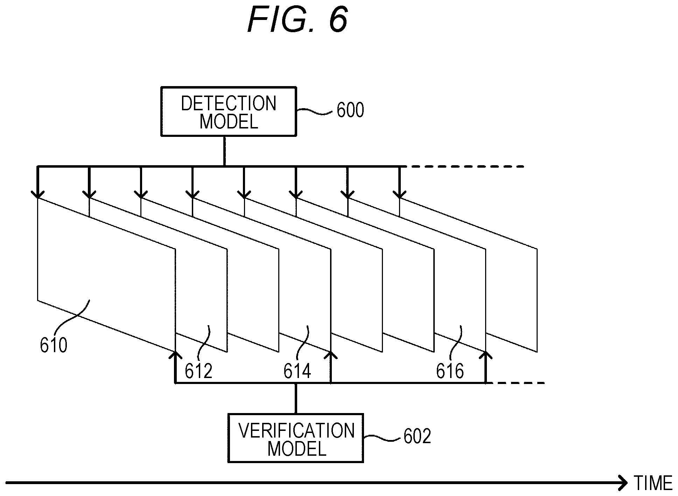

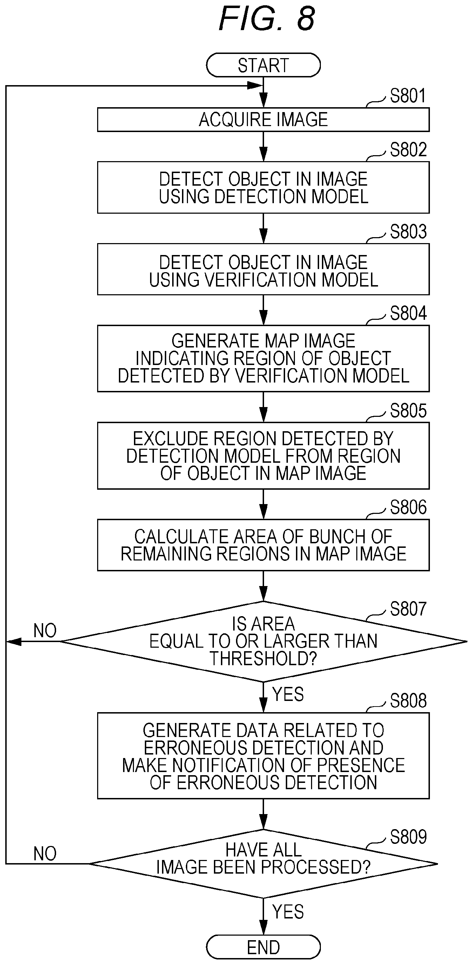

Next, a series of operations for making a notification of erroneous detection in the information processing device 100 will be described with reference to FIG. 8. The present processing is implemented by the processor 204 executing a computer program stored in the storage 208. Note that, in the following description, a case where the execution of the detection model and the execution of the verification model are executed at the same frequency (that is, for all frames) will be described as an example, but as described above, the execution frequency of the verification model may be lower than the execution frequency of the detection model. That is, as illustrated in FIG. 6, while a detection model 600 is executed for each frame (such as a frame 610) in a moving image, a verification model 602 may be executed less frequently (that is, for frames 610, 614, and 616,).

In S801, the data acquisition unit 310 acquires an image (photographed image) from the storage 208 or an external device. In S802, the object detection processing is executed by the detection model processing unit 312. For example, the detection model execution unit 314 executes a detection model on the acquired image and detects an object in the image.

Next, the erroneous detection determination processing is executed by the verification model processing unit 318. Specifically, in S803, the verification model execution unit 322 executes the verification model on the acquired image and detects an object in the image. Then, in S804, the erroneous detection determination unit 324 generates a map image (for example, the map image 426) indicating the region of the object detected by the verification model. In S805, the erroneous detection determination unit 324 excludes the region detected by the detection model from the region of the object in the map image (that is, generates the difference map image 432 by performing the difference extraction described in FIG. 4). In S806, the erroneous detection determination unit 324 calculates the area of a bunch of the remaining regions (difference region 434) in the map image, and in S806, determines whether the area is equal to or larger than a threshold. The erroneous detection determination unit 324 advances the processing to S808 in a case where it is determined that the area is equal to or larger than the threshold, and otherwise returns the processing to S801.

In S808, for example, the notification unit 326 generates notification information regarding erroneous detection and notifies the external device of the presence of erroneous detection in real time or at a predetermined timing. In S809, the detection model processing unit 312 determines whether all the images related to the moving image have been processed, and in a case where it is determined that all the images have been processed, this processing is ended, and otherwise, the processing returns to S801.

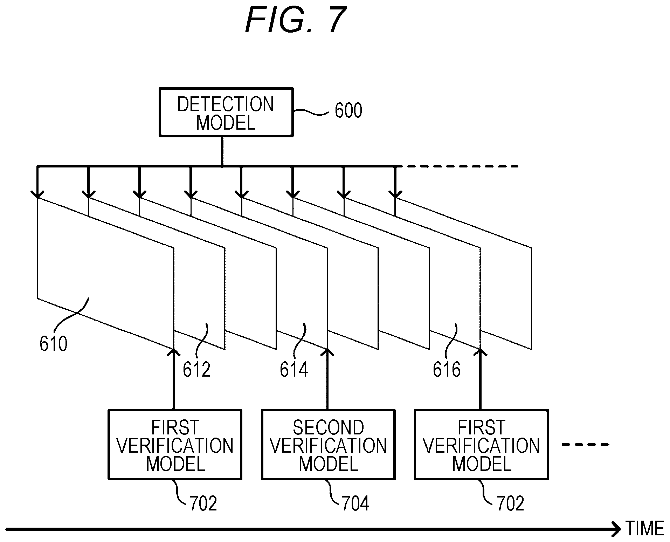

The above-described operation is also applicable to a case of using a plurality of verification models. For example, as illustrated in FIG. 7, a first verification model 702 and a second verification model 704 among a plurality of verification models may be operated alternately. For example, the first verification model 702 is executed for the frames 610 and 616, and the second verification model 704 is executed for the frame 614. At this time, the execution frequency of the first verification model 702 and the second verification model 704 together is lower than the execution frequency of the detection model 600.

As described above, in the present embodiment, the detection model execution unit 314 outputs the first detection result indicating a region where an object is detected in regions in an image using a detection model that detects an object in an image. Then, the verification model execution unit 322 outputs the second detection result indicating a region where an object is detected in regions in an image using a verification model having a different characteristic related to the detection of the object from that of the detection model. Furthermore, the erroneous detection determination unit 324 determines whether a difference between both detection results is large enough to satisfy a predetermined condition, and determines that there is erroneous detection for the detection of the object by the detection model when the difference is large enough to satisfy the condition. Furthermore, in a case where there is erroneous detection by the detection model, the notification unit 326 transmits notification information to, for example, the service provider terminal 106. With this configuration, in the present embodiment, it is possible to find erroneous detection in a machine learning model by a general-purpose mechanism without requiring additional implementation depending on factors of the erroneous detection.

The invention is not limited to the above embodiments, and various modifications and changes can be made within the scope of the gist of the invention.

## Claims

1. An information processing device (100) that detects an object in an image, the information processing device comprising:
one or more processors (204); and
a memory (202) storing one or more instructions, wherein
the one or more instructions, when executed by the one or more processors, cause the information processing device to:
output a first detection result indicating a region where an object has been detected in a region in an image by using a first machine learning model (312, 402) that detects the object in the image;
output a second detection result indicating a region where an object has been detected in a region in the image by using a second machine learning model (318, 404) having a different predetermined characteristic related to detection of the object from that of the first machine learning model; and
make a notification of presence of erroneous detection regarding detection of an object by the first machine learning model when a difference between the first detection result and the second detection result satisfies a predetermined condition.

2. The information processing device according to claim 1, wherein the second machine learning model has a robust predetermined characteristic related to detection of an object compared to the first machine learning model.

3. The information processing device according to claim 2, wherein the making a notification includes determining that the predetermined condition is satisfied in a case where an object in a region having a predetermined size or more is detected in the second detection result, in a region where no object is detected in the first detection result.

4. The information processing device according to claim 1, wherein
the one or more instructions further cause the information processing device to
acquire images of a plurality of consecutive frames,
the first machine learning model outputs the first detection result to a first number of images per second among the images of the plurality of frames, and
the second machine learning model outputs the second detection result to a second number of images per second that is smaller than the first number, among the images of the plurality of frames.

5. The information processing device according to claim 3, wherein
the one or more instructions further cause the information processing device to
output a third detection result indicating a region in which an object is detected in a region in the image by using a third machine learning model having a robust second predetermined characteristic related to detection of the object compared to the first machine learning model, and
the making a notification includes making a notification of presence of erroneous detection for detection of an object by the first machine learning model in a case where an object in a region of the predetermined size or more is detected in at least one of the second detection result and the third detection result in a region where no object is detected in the first detection result.

6. The information processing device according to claim 5, wherein the making a notification includes making a notification of information regarding an object related to erroneous detection.

7. The information processing device according to claim 1, wherein the second machine learning model has a characteristic with which a specific type of an object is capable of being robustly detected compared to the first machine learning model.
